# EUROPEAN PATENT SPECIFICATION

(11) **EP 3 427 277 B1**
(45) Date of publication and mention of the grant of the patent: **12.02.2020**
(21) Application number: 17714285.8
(22) Date of filing: 24.02.2017
(51) Int. Cl.: H01F 41/02, B21D 43/00, H02K 15/02

(54) **IMPROVED APPARATUS FOR THE ASSEMBLY OF LAMINAR ARTICLES FOR ELECTRICAL USE**
VERBESSERTE VORRICHTUNG ZUM ZUSAMMENBAU VON LAMINAREN GEGENSTÄNDEN FÜR DEN ELEKTRISCHEN GEBRAUCH
APPAREIL AMÉLIORÉ POUR L'ASSEMBLAGE D'ARTICLES LAMINAIRES À USAGE ÉLECTRIQUE

(30) Priority: 07.03.2016 IT UA20161430
(43) Date of publication of application: 16.01.2019
(73) Proprietor: Corrada S.p.A, 20020 Lainate (MI) (IT)
(72) Inventor: VERRI, Davide, 20010 Inveruno (Milano) (IT); BERTOCCHI, Gianluca, 20017 Rho (Milano) (IT)
(74) Representative: Ripamonti, Enrico
(86) International application number: PCT/IB2017/051085
(87) International publication number: WO 2017/153861

(56) References cited:
- EP-A1- 0 343 420
- GB-A- 1 548 338
- JP-A- S60 186 009

## Description

The present invention refers to an improved apparatus for the assembly of laminar articles for electrical use.

More particularly, the present invention regards an apparatus suitable to assemble and, more specifically, to stack or superimpose - one on the other - the magnetic laminae used in electric machines such as motors, generators, transformers, gauges, ignition coils and similar electrical equipment.

As known, electric machines are generally obtained by means of laminar magnetic circuits, i.e. defined by a plurality of laminae superimposed on each other and mutually constrained.

Typically, the aforementioned laminar articles, also referred to as laminar packs, are obtained by superimposing the laminae at direct contact with each other without leaving small intermediate air spaces that could generate an unwanted "spring effect"; such absence of intermediate air spaces has the purpose of optimising the electrical, dimensional and mechanical characteristics of the electric machine.

The stacking of the laminae, through the superimposition and connection thereof, is actuated by means of shearing moulds which obtain the laminae starting from a sheet and which comprise at least one detachment matrix provided with a relative braking means and a punch, such devices being suitable to attain the detachment and the subsequent stacking of the cut laminae to form the pack of laminae.

In addition, the apparatuses that obtain the stacking of the laminae typically comprise a mould that performs the shearing and the progressive superimposition of the single laminae one with respect to the other so as to obtain the pack of laminae, a first piston arranged coaxially to the mould and suitable to support the pack of laminae being formed and a second piston arranged perpendicularly to said first piston and suitable to enable the discharging of the formed pack of laminae.

The first piston is mobile according to the axial direction and suitable to be progressively lowered moving apart from the mould by an amount substantially corresponding to the thickness of the lamina so that, once the pack of laminae has been formed according to the technical manufacturing specifications (this solution enables simultaneously discharging one or more packs), said pack of laminae is no longer engaged in the mould, but at the level of the conveyor belt suitable to enable discharging.

The second piston, arranged perpendicularly to the displacement direction of the first piston, defines a pusher element that disengages the pack of laminae with respect to the first piston and displaces it on the discharging conveyor belt. Once the pack of laminae is placed on the conveyor belt, the second piston recedes so that a subsequent pack of laminae can be prepared.

A known solution having the aforementioned technical characteristics is described in GB1548338 and it refers to an apparatus for obtaining packs of laminae comprising a spindle (a first piston) for accumulating the laminae suitable to form the packs of laminae and a slide for ejecting the formed packs of laminae driven by an actuator cylinder/piston (a second piston); according to this solution, once the pack of laminae is completed, the spindle for accumulating the laminae is lowered and the ejection slide advances pushing the formed pack towards a discharging area, when said slide is returned to the inoperative position, the accumulation spindle rises again to receive new laminae suitable to form a new lamina pack.

However, such conventional apparatus reveals some important drawbacks related to the fact that when advancing the second piston to eject the formed pack of laminae and when said second piston is returning to the inoperative position, said second piston occupies the operating area of the first piston and, thus, during said steps of advancing/receding said second piston, the first piston is not operative, and thus, the process for packing a subsequent pack of laminae cannot be carried out until the second piston completely recedes to the inoperative position.

Thus, the times required for obtaining the packs of laminae are high with ensuing increase of the relative production costs and the costs of the end product as well as the amounts of the finished products.

A further drawback of the conventional apparatus lies in the risk of breakage in case of malfunction that may occur in the system, for example, should the first piston lift before the second piston returns to the inoperative position.

The object of the present invention is to overcome the aforementioned drawbacks.

More in particular, the object of the present invention is to provide an improved apparatus for the assembly of laminar articles for electrical use capable of enabling the first and the second cylinder to operate while the machine is running, i.e. with the second cylinder which, during the step of advancing/receding, does not occupy the operating area of the first cylinder and, thus, it does not cause interference between the movement of the two mobile cylinders.

A further object of the present invention is to provide an apparatus for the assembly of laminar articles capable of considerably increasing the speed for shearing the laminae, up to a value equivalent to approximately 40%, with an ensuing reduction of production times and related costs.

A further object of the present invention is to provide the users with an apparatus for the assembly of laminar products for electrical use that is suitable to guarantee a high resistance and reliability level over time and thus is economic and easy to obtain.

These and other objects are attained by the invention having the characteristics according to claim 1.

Advantageous embodiments of the invention are outlined by the dependent claims.

The construction and functional characteristics of the improved apparatus for the assembly of laminar articles for electrical use of the present invention will be clearer from the following detailed description in which reference is made to the attached drawings representing a preferred and non-limiting embodiment thereof and wherein:

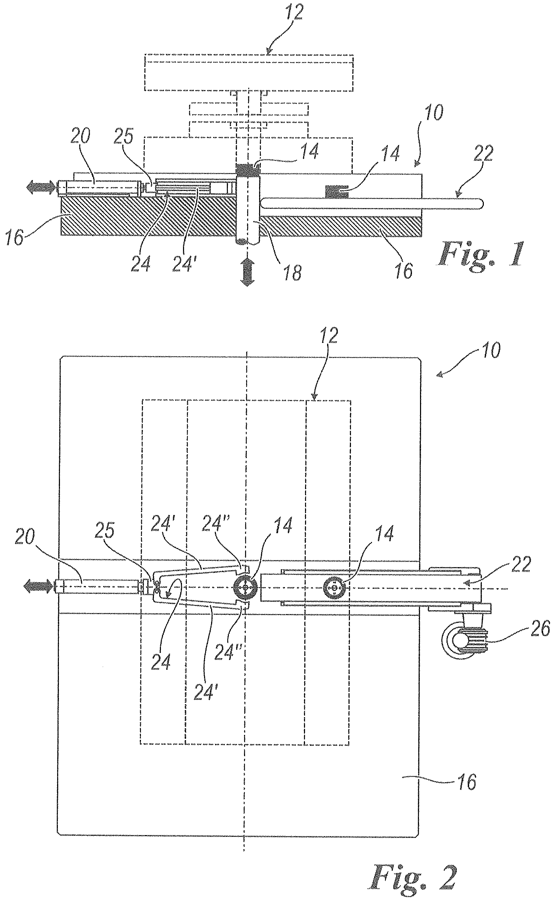

figure 1 schematically represents a front view of the improved apparatus for the assembly of laminar articles of the invention;
figure 2 schematically represents a top view of the apparatus of the invention;
figures 3 to 10 schematically represent the sequence of the operating and functioning steps of the apparatus of the invention, respectively, according to a front view (figures 3, 5, 7, 9) and according to a top view (figures 4, 6, 8, 10).

With reference to the aforementioned figures, the improved apparatus for the assembly of laminar articles for electrical use of the present invention, indicated in its entirety with 10, cooperates with a shearing pressing machine 12 of the conventional type (indicated with a dashed line in the figures and not described in detail given that it is known) suitable to obtain a shearing of laminae starting from a sheet (not indicated) and a stacking thereof superimposed on each other to define a pack of laminae 14.

The apparatus of the invention comprises a pressing plane 16 arranged beneath the shearing pressing machine 12 and suitable to house a first cylinder 18, a second cylinder 20 and a conveyor belt 22.

The first cylinder 18 is defined by a preferably oil hydraulic actuation, arranged coaxially to the opening/closing of the moulds of the shearing pressing machine 12 and suitable to support the pack of laminae 14 progressively formed by said shearing pressing machine that obtains the single laminae starting from a metal sheet and assembles them superimposed one on the other. In particular, the first cylinder 18 supports the pack of laminae 14 during the forming process thereof, absorbs the impacts related to the step for the progressive assembling or stacking of the single laminae to define the pack of laminae 14 and displaced upwards/downwards (approaching/moving apart) with respect to the shearing pressing machine 12 as better described hereinafter.

The second cylinder 20, preferably defined by an oil hydraulic actuation, is arranged upstream of the first cylinder 18 and perpendicularly with respect thereto and it is suitable to displace a gripping device, defined by a gripper 24, advancing/receding with respect to the pack of laminae 14.

The conveyor belt 22 is arranged downstream of the first cylinder 18 and it is actuated by an electric motor 26 of the known type; said conveyor belt has the function of displacing the finished packs of laminae 14 towards a discharge area or further processing apparatus (not represented in the figures).

The terms "upstream" and "downstream" are used to indicate the position of the second cylinder 20 and the conveyor belt 22 with reference to the first cylinder 18 arranged in an intermediate position with respect to said two devices.

The gripper 24 connected to the second cylinder 20 is of the angular or pivoted type and it comprises a pair of arms or jaws 24' mutually juxtaposed and hinged with an end with respect to a body 25 fixed to a stem of the second cylinder 20 and with the juxtaposed free end 24" possibly shaped in a manner corresponding to the outer lateral surface of the pack of laminae 14.

According to an alternative embodiment, the gripper 24 is of the parallel type with the arms or jaws 24' mobile along a straight line.

The length-wise extension of the arms or jaws 24' of the gripper 24 is greater than the transversal dimension of the first cylinder 18 and, preferably, more than twice the aforementioned dimension and, likewise, the distance between the two juxtaposed arms or jaws 24' in the inoperative condition of the gripper (condition 0) is greater than the transversal dimension of the first cylinder 18; this for the purpose to be further clarified hereinafter.

The opening/closing actuation of the arms or jaws 24' of the gripper 24 is of the oil hydraulic or pneumatic type or any other known type suitable for the purpose.

The function of the improved apparatus for the assembly of laminar articles for electrical use of the present invention, described in detail above with reference to the technical/functional characteristics thereof, is outlined hereinafter.

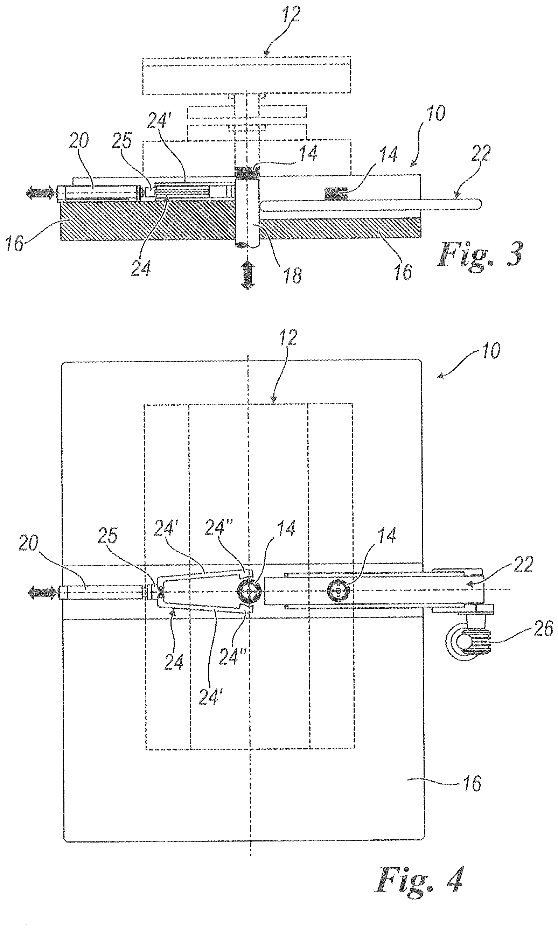

More in particular, reference shall be made to figures 3 to 10, which illustrate the sequence of operative steps of the apparatus of the invention.

Figures 3 and 4 illustrate, in front view and in top view respectively, the step of obtaining the pack of laminae 14.

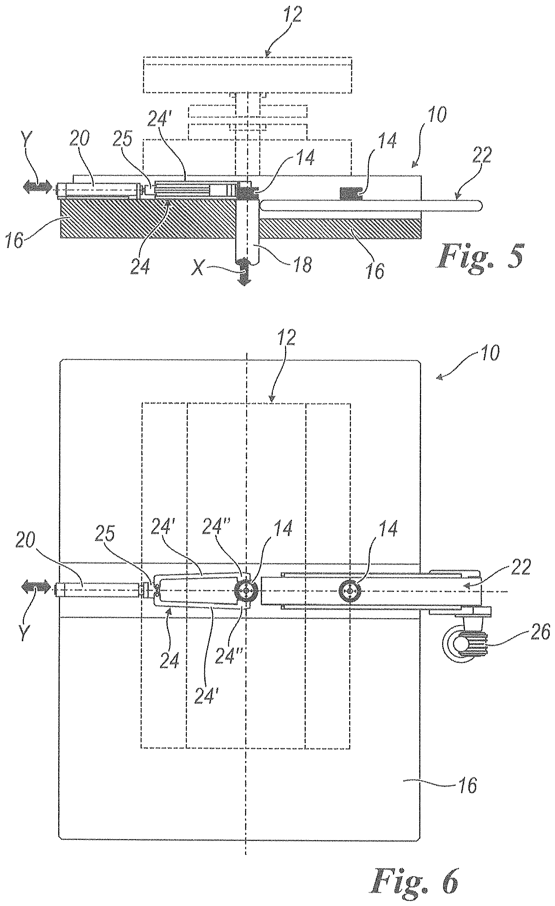

In such operative step, the first cylinder 18 is in an entirely raised position towards the shearing pressing machine and the second cylinder 20 is in a receded position with respect to the first cylinder 18 with the gripper 24 open and with the free ends 24" of said gripper enclosing the first cylinder 18 without clamping. Figures 5 and 6 illustrate, in lateral view and in top view respectively, an operative step in which the pack of laminae 14 is completed.

In such operative step, the first cylinder 18 which supports the pack of laminae 14 is in an entirely lowered position with respect to the shearing pressing machine 12 (as indicated by the arrow X in figure 5) and the second cylinder 20 is in a receded position with respect to the first cylinder 18 with the gripper 24 closed on the pack of laminae 14; in particular, the free ends 24" of the gripper 24 enclose and clamp said pack of laminae 14 at the lateral surface thereof.

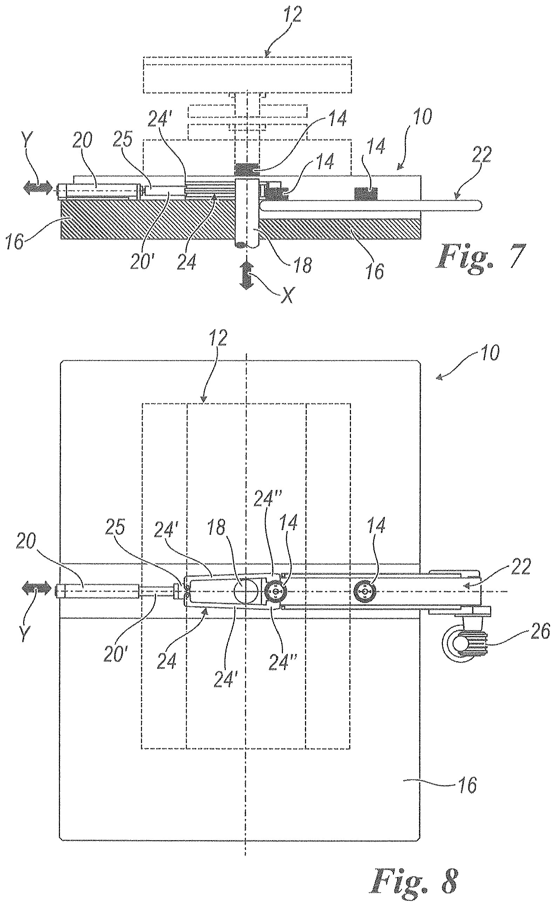

Figures 7 and 8 illustrate, in front view and in top view respectively, an operative step for displacing the pack of laminae 14 on the conveyor belt 22.

In such operative step, the fist cylinder 18 is actuated in lifting (as indicated by the arrow X in figure 7) and carried in an entirely raised position with respect to the shearing pressing machine 12 for receiving a new pack of laminae 14 in the assembling step, the second cylinder 20 is actuated with the stem 20' thereof which advances towards the first cylinder 18 displacing the gripper 24 towards the conveyor belt 22; in particular, the gripper 24 is closed with the arms or jaws 24' that clamp the pack of laminae 14 between the ends 24".

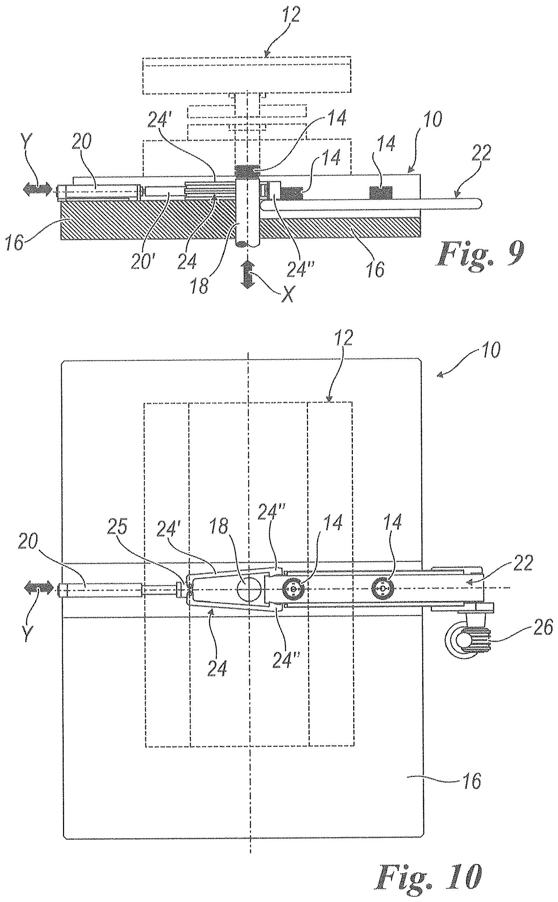

Figures 9 and 10 illustrate, in front view and in a top view respectively, an operative step for discharging the pack of laminae 14 on the conveyor belt and returning to the inoperative position.

In such operative step, the first cylinder 18 is in an entirely raised position in the direction of the shearing pressing machine and it supports the pack of laminae 14 during the assembling step, the second cylinder 20 has the stem 20' in a projecting position towards the first cylinder with the gripper 24 open and, thus, with the arms or jaws 24' not at contact with the pack of laminae 14; in such step, the pack of laminae 14, with the opening of the gripper 24 is actually placed on the conveyor belt 22 that displaces it towards a discharge or further processing steps.

During this operative step, once the pack of laminae 14 is placed on the conveyor belt, the second cylinder 20 with the gripper 24 open, carries out a receding movement moving to the inoperative position (as indicated in figures 3 and 4) so as to be ready to grasp and move the pack of laminae 14 during the step of assembling on the first cylinder 18.

The advantages attained by the apparatus of the invention are observable in the light of the above.

The improved apparatus for the assembly of laminar articles for electrical use of the present invention, due to the presence of the gripper for grasping the pack of laminae, advantageously enables performing the operations for discharging a finished pack of laminae and assembling a new pack of laminae while the machine is running, without interrupting the step of assembling a new pack of laminae for a time corresponding to the time for discharging the finished pack of laminae. Such advantageous characteristic leads to the possibility of increasing the speed for shearing the laminae by the shearing pressing machine (up to 40% more with respect to conventional devices), increasing the speed for assembling the packs of laminae, increasing production alongside an advantageous reduction of the production times and the relative costs.

A further advantage is represented by the fact that the apparatus of the invention, due to the presence of the gripper as described, averts the risk of breakage that may occur in case of malfunctions of the system; as a matter of fact, for example, there are no chances of collision between the mobile parts for assembling and displacing the packs of laminae.

Though the invention has been described with particular reference to an embodiment thereof provided solely by way of non-limiting example, numerous modifications and variants shall be clear to a man skilled in the art in the light of the description above. Thus, the present invention protects all modifications and variants that fall within the scope of protection of the claims that follow.

## Claims

1. An improved apparatus (10) for the assembly of laminar articles for electrical use, the laminar articles being of the type of magnetic laminae used in electric machines such as motors, generators, transformers, gauges, ignition coils and similar electrical equipment, connectable to a shearing pressing machine (12) and comprising a pressing plane (16) arrangeable beneath the shearing pressing machine (12) and a first cylinder (18) housed by said pressing plane and suitable to support a pack of laminae (14) defined by the superimposition of a plurality of laminae obtainable by means of the shearing pressing machine (12) during the forming process, a second cylinder (20) for discharging a finished pack of laminae (14) and a conveyor belt (22) suitable to displace said pack of laminae (14) to a discharging station, the apparatus **characterised in that** it comprises a gripper (24) provided with a pair of mutually juxtaposed arms or jaws (24'), with a constrained end with respect to a body (25) fixed to a stem of the second cylinder (20) and with a juxtaposed end (24") of each arm or jaw free and shaped in a manner corresponding to the outer lateral surface of the pack of laminae (14) and with said gripper (24) being adapted to cooperate with the first cylinder (18) to operate while the machine is running.

2. The apparatus according to claim 1, **characterised in that** the first cylinder (18) is arranged coaxially to the direction for opening/closing the shearing pressing machine (12) and it is actuated to move upwards/downwards, i.e. approaching/moving apart, with respect to said shearing pressing machine (12), the second cylinder (20) arranged upstream of the first cylinder(18) and perpendicularly thereto and it is actuated advancing/receding with respect to the first cylinder(18), the conveyor belt (22) arranged downstream of the first cylinder (18) and driven by an electric motor (26), the first cylinder (18) being arranged in an intermediate position with respect to said second cylinder (20) and conveyor belt (22).

3. The apparatus according to claim 1, **characterised in that** the gripper (24) is of the angular or pivoted type.

4. The apparatus according to claim 1, **characterised in that** the gripper (24) is of the parallel type.

5. The apparatus according to any one of the preceding claims, **characterised in that** the length-wise extension of the arms or jaws (24') of the gripper (24) is greater than the transversal dimension of the first cylinder (18) and the distance between the two juxtaposed arms or jaws (24') in an inoperative condition of the gripper, i.e. gripper closed configuration, is greater than the transversal dimension of the first cylinder (18).

6. The apparatus according to claim 5, **characterised in that** the length-wise extension of the arms or jaws (24') of the gripper (24) is at least twice the transversal dimension of the first cylinder (18).

7. The apparatus according to any one of the preceding claims, **characterised in that** the first cylinder (18), the second cylinder (20) and the gripper (24) are of the pneumatic or oil hydraulic actuation type.

8. Method for the assembly of laminar articles for electrical use by means of the improved apparatus according to any one of the preceding claims, **characterised in that** it comprises the operating steps of:
- obtaining the pack of laminae (14) with the first cylinder (18) in an entirely raised position in the direction of the shearing pressing machine (12) and the second cylinder (20) in a receded position with respect to the first cylinder (18) and with the gripper (24) open;
- completing the pack of laminae (14) with the first cylinder (18) supporting the pack of laminae (14) in an entirely lowered position with respect to the shearing pressing machine (12) and the second cylinder (20) in receded position with respect to the first cylinder (18) with the gripper (24) closed on the pack of laminae (14) by means of the free ends (24' ') that enclose and clamp said pack of laminae (14) at the lateral surface;
- displacing the pack of laminae (14) on the conveyor belt (22) with the first cylinder (18) in an entirely raised position with respect to the shearing pressing machine (12) to receive a new pack of laminae (14) in the assembling step and with the second cylinder (20) driven in advance with the stem (20') displaced in the direction of the first cylinder (18) and the conveyor belt (22), the gripper (24) being closed with the arms or grippers (24') clamping the pack of laminae (14) between the ends (24");
- discharging the pack of laminae (14) on the conveyor belt (22) with the first cylinder (18) in an entirely raised position in the direction of the shearing pressing machine (12) and supporting the pack of laminae (14) during the assembling step, the second cylinder (20) with the stem (20') in an entirely projecting position in the direction of the first cylinder (18) and with the gripper (24) open and the arms or jaws (24') not at contact with the pack of laminae (14);
- returning to the inoperative position with the stem (20') of the second cylinder (20) with the gripper (24) open receded upstream of the first cylinder (18).

9. Method for the assembly of the laminar articles according to claim 8, **characterised in that** the displacements for raising/lowering the first cylinder (18), advancing/receding the second cylinder (20) and opening/closing the gripper (24) occur in while the machine is running.

## Patentansprüche

1. Verbesserte Vorrichtung (10) zum Zusammensetzen von laminaren Artikeln zur elektrischen Verwendung, wobei die laminaren Artikel von der Art magnetischer Laminate sind, die in elektrischen Maschinen, wie z. B. Motoren, Generatoren, Transformatoren, Messgeräten, Zündspulen und ähnlichen elektrischen Geräten verwendet werden, die an eine Scherpressmaschine (12) angeschlossen werden können, und umfassend eine Pressebene (16), die unter der Scherpressmaschine (12) angeordnet werden kann, und einen ersten Zylinder (18), der durch die Pressebene aufgenommen und geeignet ist, ein Lamellenpaket (14) zu tragen, das durch die Überlagerung einer Vielzahl von Laminaten definiert ist, die mittels der Scherpressmaschine (12) während des Formungsprozesses erlangt werden können, einen zweiten Zylinder (20) zum Entladen eines fertigen Lamellenpakets (14) und ein Förderband (22), das geeignet ist, um das Lamellenpaket (14) zu einer Entladestation zu verlagern, wobei die Vorrichtung **dadurch gekennzeichnet ist, dass** sie einen Greifer (24) umfasst, der mit einem Paar voneinander gegenüberliegenden Armen oder Backen (24') versehen ist, wobei ein begrenztes Ende in Bezug auf einen Körper (25) an einem Schaft des zweiten Zylinders (20) befestigt ist, und wobei ein nebeneinander liegendes Ende (24") von jedem Arm oder jeder Backe frei und auf eine Weise geformt ist, die der äußeren Seitenfläche des Lamellenpakets (14) entspricht, und wobei der Greifer (24) angepasst ist, um mit dem ersten Zylinder (18) zusammenzuwirken, um während des Betriebs der Maschine betrieben zu werden.

2. Vorrichtung nach Anspruch 1, **dadurch gekennzeichnet, dass** der erste Zylinder (18) koaxial zu der Richtung zum Öffnen/Schließen der Scherpressmaschine (12) angeordnet ist und betätigt wird, um sich in Bezug auf die Scherpressmaschine (12) nach oben/unten zu bewegen, d. h. sich anzunähern/auseinander zu bewegen, wobei der zweite Zylinder (20) stromaufwärts von dem ersten Zylinder (18) und senkrecht dazu angeordnet ist und in Bezug auf den ersten Zylinder (18) vorwärts/rückwärts betätigt wird, wobei das Förderband (22) stromabwärts von dem ersten Zylinder (18) angeordnet ist und von einem Elektromotor (26) angetrieben wird, wobei der erste Zylinder (18) an einer Zwischenposition in Bezug auf den zweiten Zylinder (20) und das Förderband (22) angeordnet ist.

3. Vorrichtung nach Anspruch 1, **dadurch gekennzeichnet, dass** der Greifer (24) vom Winkel- oder Schwenk-Typ ist.

4. Vorrichtung nach Anspruch 1, **dadurch gekennzeichnet, dass** der Greifer (24) vom Paralleltyp ist.

5. Vorrichtung nach einem der vorherigen Ansprüche, **dadurch gekennzeichnet, dass** die längsgerichtete Erstreckung der Arme oder Backen (24') des Greifers (24) größer ist als das Quermaß des ersten Zylinders (18), und der Abstand zwischen den zwei nebeneinander liegenden Armen oder Backen (24') in einem nicht funktionierenden Zustand des Greifers, d. h. einer geschlossenen Greiferkonfiguration, größer ist als das Quermaß des ersten Zylinders (18).

6. Vorrichtung nach Anspruch 5, **dadurch gekennzeichnet, dass** die längsgerichtete Erstreckung der Arme oder Backen (24') des Greifers (24) mindestens doppelt so groß ist wie das Quermaß des ersten Zylinders (18).

7. Vorrichtung nach einem der vorherigen Ansprüche, **dadurch gekennzeichnet, dass** der erste Zylinder (18), der zweite Zylinder (20) und der Greifer (24) vom pneumatischen oder ölhydraulischen Betätigungstyp sind.

8. Verfahren zum Zusammensetzen von laminaren Artikeln zur elektrischen Verwendung mittels der verbesserten Vorrichtung nach einem der vorherigen Ansprüche, **dadurch gekennzeichnet, dass** es die folgenden Betriebsschritte umfasst:
- Erlangen des Lamellenpakets (14) mit dem ersten Zylinder (18) in einer vollständig angehobenen Position in Richtung der Scherpressmaschine (12) und dem zweiten Zylinder (20) in einer zurückgezogenen Position in Bezug auf den ersten Zylinder (18) und bei offenem Greifer (24);
- Vervollständigen des Lamellenpakets (14) mit dem ersten Zylinder (18), der das Lamellenpaket (14) in einer vollständig abgesenkten Position in Bezug auf die Scherpressmaschine (12) trägt, und dem zweiten Zylinder (20) in zurückgezogener Position in Bezug auf den ersten Zylinder (18), wobei der Greifer (24) auf dem Lamellenpaket (14) mittels der freien Enden (24"), die das Lamellenpaket (14) an der Seitenfläche umschließen und einspannen, geschlossen ist;
- Verlagern des Lamellenpakets (14) auf dem Förderband (22) mit dem ersten Zylinder (18) in einer vollständig angehobenen Position in Bezug auf die Scherpressmaschine (12) zum Aufnehmen eines neuen Lamellenpakets (14) in dem Zusammensetzungsschritt und mit dem zweiten Zylinder (20), der mit dem in Richtung des ersten Zylinders (18) und des Förderbands (22) verlagerten Schaft (20') vorwärts angetrieben wird, wobei der Greifer (24) geschlossen ist, wobei die Arme oder Greifer (24') das Lamellenpaket (14) zwischen den Enden (24") einspannen;
- Entladen des Lamellenpakets (14) auf dem Förderband (22) mit dem ersten Zylinder (18) in einer vollständig angehobenen Position in Richtung der Scherpressmaschine (12) und Tragen des Lamellenpakets (14) während des Zusammensetzungsschritts, wobei der zweite Zylinder (20) mit dem Schaft (20') in einer vollständig vorstehenden Position in Richtung des ersten Zylinders (18) ist, und wobei der Greifer (24) offen ist und die Arme oder Backen (24') nicht in Kontakt mit dem Lamellenpaket (14) sind;
- Zurückkehren in die Ruhestellung mit dem Schaft (20') des zweiten Zylinders (20) bei offenem Greifer (24), der stromaufwärts von dem ersten Zylinder (18) zurückgezogen ist.

9. Verfahren zum Zusammensetzen der laminaren Artikel nach Anspruch 8, **dadurch gekennzeichnet, dass** die Verlagerungen zum Anheben/Senken des ersten Zylinders (18), zum Vor- und Zurückbewegen des zweiten Zylinders (20) und zum Öffnen/Schließen des Greifers (24) bei laufender Maschine erfolgen.

## Revendications

1. Appareil amélioré (10) pour l'assemblage d'articles laminaires à usage électrique, les articles laminaires étant du type lamelles magnétiques, utilisés dans des machines électriques telles que des moteurs, des générateurs, des transformateurs, des jauges, des bobines d'allumage et des équipements électriques similaires, connectable à une machine de pressage et de découpage (12) et comprenant un plan de pressage (16) pouvant être disposé sous la machine de pressage et de découpage (12) et un premier cylindre (18) logé dans ledit plan de pressage et conçu pour soutenir un bloc de lamelles (14) défini par la superposition d'une pluralité de lamelles pouvant être obtenue au moyen de la machine de pressage et de découpage (12) lors du processus de façonnage, un second cylindre (20) pour le déchargement d'un bloc de lamelles (14) fini et une bande transporteuse (22) conçue pour déplacer ledit bloc de lamelles (14) vers une station de déchargement, l'appareil **caractérisé en ce qu'**il comprend une pince (24) dotée d'une paire de bras ou de mâchoires (24') mutuellement juxtaposé(e)s, avec une extrémité contrainte par rapport à un corps (25) fixé à une tige du second cylindre (20), avec une extrémité juxtaposée (24") de chaque bras ou mâchoire libre et façonnée d'une manière correspondant à la surface latérale externe du bloc de lamelles (14) et avec ladite pince (24) apte à coopérer avec le premier cylindre (18) pour fonctionner lorsque la machine fonctionne.

2. Appareil selon la revendication 1, **caractérisé en ce que** le premier cylindre (18) est placé coaxialement à la direction d'ouverture/de fermeture de la machine de pressage et de découpage (12) et est actionné pour monter/descendre, c'est-à-dire s'approcher/s'éloigner, par rapport à ladite machine de pressage et de découpage (12), le second cylindre (20) est placé en amont du premier cylindre (18) et perpendiculairement à ce dernier et est actionnée pour avancer/reculer par rapport au premier cylindre (18), la bande transporteuse (22) est placée en aval du premier cylindre (18) et entraînée par un moteur électrique (26), le premier cylindre (18) étant placé dans une position intermédiaire par rapport audit second cylindre (20) et à ladite bande transporteuse (22).

3. Appareil selon la revendication 1, **caractérisé en ce que** la pince (24) est de type angulaire ou à pivotement.

4. Appareil selon la revendication 1, **caractérisé en ce que** la pince (24) est de type parallèle.

5. Appareil selon l'une quelconque des revendications précédentes, **caractérisé en ce que** l'extension longitudinale des bras ou mâchoires (24') de la pince (24) est supérieure à la dimension transversale du premier cylindre (18) et la distance entre les deux bras ou mâchoires (24') juxtaposé(e)s dans un état de non fonctionnement de la pince, c'est-à-dire une configuration fermée de la pince, est supérieure à la dimension transversale du premier cylindre (18).

6. Appareil selon la revendication 5, **caractérisé en ce que** l'extension longitudinale des bras ou mâchoires (24') de la pince (24) équivaut au moins à deux fois la dimension transversale du premier cylindre (18).

7. Appareil selon l'une quelconque des revendications précédentes, **caractérisé en ce que** le premier cylindre (18), le second cylindre (20) et la pince (24) sont de type à actionnement pneumatique ou hydraulique.

8. Méthode pour l'assemblage d'articles laminaires à usage électrique au moyen de l'appareil amélioré selon l'une quelconque des revendications précédentes, **caractérisée en ce qu'**elle comprend les étapes de fonctionnement suivantes :
- obtention du bloc de lamelles (14) avec le premier cylindre (18) dans une position entièrement levée dans la direction de la machine de pressage et de découpage (12) et le second cylindre (20) dans une position reculée par rapport au premier cylindre (18) et avec la pince (24) ouverte ;
- complétion du bloc de lamelles (14) avec le premier cylindre (18) soutenant le bloc de lamelles (14) dans une position entièrement abaissée par rapport à la machine de pressage et de découpage (12) et le second cylindre (20) dans une position reculée par rapport au premier cylindre (18) et avec la pince (24) fermée sur le bloc de lamelles (14) au moyen des extrémités libres (24") qui entourent et serrent ledit bloc de lamelles (14) au niveau de la surface latérale ;
- déplacement du bloc de lamelles (14) sur la bande transporteuse (22) avec le premier cylindre (18) dans une position entièrement levée par rapport à la machine de pressage et de découpage (12) pour recevoir un nouveau bloc de lamelles (14) lors de l'étape d'assemblage et avec le second cylindre (20) entraîné en avance avec la tige (20') déplacée dans la direction du premier cylindre (18) et de la bande transporteuse (22), la pince (24) étant fermée par les bras ou mâchoires (24') serrant le bloc de lamelles (14) entre les extrémités (24") ;
- déchargement du bloc de lamelles (14) sur la bande transporteuse (22) avec le premier cylindre (18) dans une position entièrement levée dans la direction de la machine de pressage et de découpage (12) et soutenant le bloc de lamelles (14) lors de l'étape d'assemblage, le second cylindre (20) avec la tige (20') dans une position faisant entièrement saillie dans la direction du premier cylindre (18) et avec la pince (24) ouverte et les bras ou mâchoires (24') n'étant pas en contact avec le bloc de lamelles (14) ;
- retour à la position de non fonctionnement avec la tige (20') du second cylindre (20) avec la pince (24) ouverte reculée en amont du premier cylindre (18).

9. Méthode pour l'assemblage des articles laminaires selon la revendication 8, **caractérisée en ce que** les déplacements pour lever/abaisser le premier cylindre (18), avancer/reculer le second cylindre (20) et ouvrir/fermer la pince (24) surviennent lorsque la machine fonctionne.
